# EUROPÄISCHE PATENTSCHRIFT

(11) **EP 3 605 256 B1**
(45) Veröffentlichungstag und Bekanntmachung des Hinweises auf die Patenterteilung: **05.01.2022**
(21) Anmeldenummer: 19185646.7
(22) Anmeldetag: 11.07.2019
(51) Int. Cl.: G05D 1/00, G05B 23/02

(54) **SYSTEM UND VERFAHREN ZUM ÜBERWACHEN DES ZUSTANDS EINES UNBEMANNTEN LUFTFAHRZEUGS**
SYSTEM AND METHOD FOR MONITORING THE CONDITION OF AN UNMANNED AERIAL VEHICLE
SYSTÈME ET PROCÉDÉ DE SURVEILLANCE DE L'ÉTAT D'UN AÉRONEF SANS PILOTE

(30) Priorität: 31.07.2018 DE 102018118437
(43) Veröffentlichungstag der Anmeldung: 05.02.2020
(73) Patentinhaber: Airbus Defence and Space GmbH, 82024 Taufkirchen (DE)
(72) Erfinder: Hunkel, Peter, 82024 Taufkirchen (DE)
(74) Vertreter: LKGLOBAL Lorenz & Kopf PartG mbB Patentanwälte

(56) Entgegenhaltungen:
- WO-A1-2017/100245
- JP-A- 2017 097 602
- US-A1- 2015 108 281
- US-A1- 2016 370 800
- US-A1- 2017 308 080
- US-B1- 10 112 727

## Beschreibung

### TECHNISCHES GEBIET

Die Erfindung betrifft ein System und ein Verfahren zum Überwachen des Zustands eines unbemannten Luftfahrzeugs.

### HINTERGRUND DER ERFINDUNG

Behörden für die Zertifizierung von Luftfahrzeugen, wie etwa EASA, verlangen in Entwürfen zu Regularien für die zivile Zulassung von unbemannten Luftfahrzeugen, dass jedes Luftfahrzeug von einem verantwortlichen Piloten gesteuert werden muss. Dies ist unabhängig davon, ob sich dieser im Cockpit des Flugzeugs oder am Boden in einer Bodenkontrollstation befindet. Ein Pilot, der das Luftfahrzeug über eine Bodenkontrollstation steuert, kann über einen entsprechenden Datenlink Steuerbefehle an das Luftfahrzeug senden und gleichzeitig das Luftfahrzeug überwachen.

WO 2017/100245 A1 offenbart eine Computerarchitektur und eine Software, die so konfiguriert ist, dass sie einen Dateneingangsbetrieb an einem Anlagenüberwachungssystem auf der Grundlage eines Vorhersagemodells modifiziert. Das Anlagenüberwachungssystem kann ein Vorhersagemodell ausführen, das einen Indikator dafür ausgibt, ob mindestens ein Ereignis aus einer Gruppe von Ereignissen wahrscheinlich an einer bestimmten Anlage innerhalb eines bestimmten Zeitraums in der Zukunft auftreten wird. Auf der Grundlage der Ausgabe dieses Vorhersagemodells kann das Anlagenüberwachungssystem einen oder mehrere Betriebsparameter für die Aufnahme von Daten von der gegebenen Anlage ändern, wie z.B. einen Speicherort für die aufgenommenen Daten, einen Satz von Datenvariablen von der Anlage, die aufgenommen werden, und/oder eine Rate, mit der Daten von der Anlage aufgenommen werden.

US 2016/370800 A1 zeigt Verfahren, Systeme und Vorrichtungen zur Steuerung eines unbemannten Flugzeugs. Ein Server kann von einem unbemannten Luftfahrzeug den Hinweis erhalten, dass ein Übergang vom autonomen Flug zum pilotengesteuerten Flug erforderlich ist, während sich das unbemannte Luftfahrzeug im autonomen Flug befindet. Der Server kann eine Pilotenstation auswählen, um einen pilotengesteuerten Flug des UAV durchzuführen. Die Auswahl einer Pilotenstation für den pilotengesteuerten Flug des UAV kann auf einem mit der Pilotenstation verbundenen Pilotenkriterium basieren. Ein UAV kann einen Zustand erkennen, der einen Übergang vom autonomen Flug zum pilotengesteuerten Flug erfordert, und auf der Grundlage des erkannten Zustands ein Pilotenkriterium für den pilotengesteuerten Flug festlegen. Das UAV kann eine Anfrage für einen Piloten senden, die das Pilotenkriterium und Informationen über den Zustand enthält.

### ZUSAMMENFASSUNG DER ERFINDUNG

Die Überwachung und Steuerung einer Vielzahl von unbemannten Luftfahrzeugen ist mit den Mitteln des Standes der Technik unter Berücksichtigung der genannten Regularien nur mithilfe einer ebensolchen Vielzahl von Bodenkontrollstationen möglich. Dies kann zu einer beträchtlichen Anzahl von Piloten führen, die jeweils ein einzelnes Luftfahrzeug überwachen und steuern.

Eine Aufgabe der Erfindung liegt demnach darin, ein System vorzuschlagen, das die Überwachung und Steuerung einer Vielzahl von unbemannten Luftfahrzeugen mit einer vorgeschriebenen Zuverlässigkeit und Sicherheut erlaubt, ohne eine ebensolche Vielzahl von Piloten zu erfordern.

Die Aufgabe wird durch ein System mit den Merkmalen des unabhängigen Anspruchs 1 gelöst. Vorteilhafte Ausführungsformen und Weiterbildungen sind den Unteransprüchen und der nachfolgenden Beschreibung zu entnehmen.

Es wird ein System zum Überwachen des Zustands eines unbemannten Luftfahrzeugs vorgeschlagen, das System aufweisend eine erste Kommunikationseinheit, eine zweite Kommunikationseinheit, die in das Luftfahrzeug integrierbar ist, eine in das Luftfahrzeug integrierbare Zustandsübertragungseinheit zum Übertragen von Zustandsdaten des Luftfahrzeugs, eine dem Luftfahrzeug zugeordnete Recheneinheit zum Überwachen des Zustands des Luftfahrzeugs und eine mit der Recheneinheit verbundene externe Steuer- und Überwachungseinheit mit Eingabemitteln, wobei die Recheneinheit dazu eingerichtet ist, ein Simulationsmodell des betreffenden Luftfahrzeugs auszuführen, wobei das Simulationsmodell auf einer numerischen Integration eines Gleichungssystems mit einem Simulations-Zustandsvektor basiert, Flugzustandsdaten der Zustandsübertragungseinheit zu empfangen, wiederholt den Simulations-Zustandsvektor zumindest einer Teilmenge von zuvor gemessenen Flugzustandsdaten durch schrittweise Anpassung mindestens eines Funktionsglieds des Simulationsmodells durch mindestens einen Modellfehlerkorrekturterm nachzuführen, wobei der Modellfehlerkorrekturterm aus einer ermittelten Differenz aus einer gemessenen Zustandsgröße und einer simulierten Zustandsgröße ermittelt wird, und den Verlauf des mindestens einen Modellfehlerkorrekturterms zu überwachen und bei einmaligem oder wiederholtem Überschreiten vorgegebener Intervallgrenzen durch den Modellfehlerkorrekturterm ein Warnsignal an die Steuer- und Überwachungseinheit zu senden, wobei die Steuer- und Überwachungseinheit dazu eingerichtet ist, bei Empfang eines Warnsignals einem Benutzer unmittelbar einen Warnhinweis auszugeben, kontinuierlich von der Zustandsübertragungseinheit ausgesandte Flugzustandsdaten des Luftfahrzeugs anzuzeigen und einen Steuerungsmodus des Luftfahrzeugs zu einer direkten Steuerung durch den Benutzer durch Senden eines entsprechenden Schaltbefehls an das Luftfahrzeug zu ändern.

Das erfindungsgemäße System erlaubt hierbei, auch mehrere unbemannte Luftfahrzeuge durch eine einzelne Steuer- und Überwachungseinheit zu überwachen, die von einem einzelnen Piloten bedient wird. Dennoch ist für jedes Luftfahrzeug eine Möglichkeit zur eigenständigen, individuellen und direkten Steuerung und Überwachung durch einen Benutzer gegeben. Das Zahlenverhältnis von Luftfahrzeugen zu Piloten könnte dabei etwa über einen schlechtesten anzunehmenden Fall von echten Systemfehlerraten und Falschalarmraten definiert werden. Es könnte sich anbieten, eine Gruppe von bis zu 5, 10, 20 oder 50 Luftfahrzeugen durch ein erfindungsgemäßes System überwachen zu lassen, wobei lediglich eine einzelne Steuer- und Überwachungseinheit vorhanden ist.

Durch das erfindungsgemäße System kann unmittelbar bei Detektion einer Unregelmäßigkeit, die zu einem plötzlich erhöhten Aufwand zum Nachführen des Simulationsmodells führt, eine Steuer- und Überwachungseinheit auf das betreffende Luftfahrzeug gerichtet bzw. fokussiert werden. Das System basiert im Wesentlichen auf drei Kernkomponenten, die als Zustandsendeeinheit, Recheneinheit und Steuer- und Überwachungseinheit bezeichnet werden. Diese werden nachfolgend im Zusammenhang mit ihrer Funktion erläutert.

An dieser Stelle sei darauf hingewiesen, dass das Luftfahrzeug mit geeigneten Mitteln ausgestattet ist, einen gesteuerten Flug durchzuführen. Unter anderem könnten hierunter eine Schub erzeugende Einrichtung, eine oder mehrere Auftrieb erzeugende Einrichtungen und Einrichtungen zur Beeinflussung der Aerodynamik in Form von Steuerklappen und ähnlichem fallen. Des Weiteren könnte auch mindestens eine interne Regeleinheit vorhanden sein, welche dazu in der Lage ist, empfangene Steuerbefehle direkt in eine Beeinflussung dieser Einrichtungen umzusetzen. Es kann auch mindestens eine Kommunikationseinheit vorhanden sein, mit der das Luftfahrzeug mit externen Einrichtungen kommunizieren kann. Hierüber können sowohl Steuerbefehle empfangen werden als auch Zustandsdaten übertragen werden.

Die Recheneinheit kann eine interne Recheneinheit sein, welche vollständig in das Luftfahrzeug integriert ist. Die Recheneinheit könnte in einem besonderen Fall dazu in der Lage sein, das Luftfahrzeug durch Reaktion auf Steuerbefehle von außen zumindest teilweise zu steuern und hierzu in einen Steuer- oder Regelprozess des Luftfahrzeugs integriert sein. Die Steuerbefehle können in unterschiedliche Ebenen gefasst sein. Es ist vorstellbar, durch die Recheneinheit etwa lediglich eine Flugbahn oder Flugroute vorzugeben, so dass das Luftfahrzeug durch geeignete Ansteuerung einer Regeleinheit diese Flugbahn oder Flugroute selbstständig einnimmt. Allerdings könnte in einem besonderen Fall die Recheneinheit auch direkte Steuerbefehle vornehmen, die unmittelbar zu einer Veränderung des momentanen Flugzustands führen. Diese Funktionen könnten allerdings auch ausschließlich in einer anderen Einrichtung, etwa der genannten Regeleinheit, vorhanden sein, so dass die Recheneinheit für die Ausführung des Simulationsmodells und etwaiger damit verbundener Funktionen dediziert ist.

Die Zustandsübertragungseinheit ist als eine Einrichtung an Bord eines Luftfahrzeugs zu verstehen, welche insbesondere Sensordaten zu der Recheneinheit bzw. zu der Steuer- und Überwachungseinheit übertragen kann. Die Übertragung kann durch die vorangehend genannten Kommunikationseinheiten durchgeführt werden. Die Zustandsübertragungseinheit kann dabei insbesondere mit der zweiten Kommunikationseinheit verbunden sein und über diese die relevanten Zustandsdaten an die erste Kommunikationseinheit übertragen. Die erste Kommunikationseinheit ist hierzu mit der Recheneinheit und der Steuer- und Überwachungseinheit gekoppelt. Ist die Recheneinheit eine interne Recheneinheit kann auch eine einfachere, drahtgebundene Kommunikation zwischen der Zustandsübertragungseinheit und der Recheneinheit erfolgen. Ist das Luftfahrzeug lediglich mit einer einzelnen Recheneinheit ausgestattet, die mit sämtlichen Funktionen zur Steuerung des Luftfahrzeugs und zur Ausführung einer Simulation vorgesehen ist, kann die Übertragung der Flugzustandsdaten zu dem logischen Abschnitt der Recheneinheit, der das Simulationsmodell ausführt, auch durch eine softwarebasierte Schnittstelle erfolgen.

Die Flugzustandsdaten können insbesondere Beschleunigungen in allen drei Raumrichtungen, Drehraten um alle Raumachsen, beispielsweise gemessen im flugzeugfesten Koordinatensystem, barometrischen Luftdruck, dynamischen Luftdruck, Klappenstellungen, Zustand einer Schub erzeugenden Einheit und dergleichen umfassen. Es sollten möglichst die Zustandsdaten gewählt und übertragen werden, die die Bewegung des Luftfahrzeugs repräsentieren und einen Aufschluss darüber geben können, in welchem Zustand sich das Luftfahrzeug aktuell befindet.

Eine erfindungsgemäße Besonderheit der Recheneinheit liegt in der Ausführung eines Simulationsmodells des betreffenden Luftfahrzeugs. Grundsätzlich kann ein solches Simulationsmodell auf einer getakteten, numerischen Integration eines Gleichungssystems basieren, das ein lineares oder nichtlineares Gleichungssystem sein kann. Mit dem Gleichungssystem wird im besonderen Fall ein Kräftegleichgewicht insbesondere von Auftrieb, Gewichtskräften, Massenkräften, Schub und Widerstand gebildet und hieraus translatorische und rotatorische Beschleunigungen des Luftfahrzeugs ermittelt. In einer vorteilhaften Ausführungsform ist das Gleichungssystem folglich ein flugmechanisches Gleichungssystem. Einige dieser ermittelten Größen, die auch unter den Begriff der Simulationszustände fallen, werden wieder zurückgeführt, um mit ihnen in einem nächsten Rechenschritt wiederum Beschleunigungen für ein nächstes Zeitinkrement zu berechnen. Das Simulationsmodell soll dabei über sämtliche Eingangsgrößen verfügen, wie das reale Luftfahrzeug. Dies betrifft insbesondere Steuerbefehle zum Bewegen von Klappen und zur Beeinflussung des Schubs.

Es wird an dieser Stelle darauf hingewiesen, dass es keinen vorgeschriebenen Standard für den Inhalt eines Zustandsvektors eines solchen Luftfahrzeugs gibt. Die Konzeption eines Simulationsmodells und folglich die Auswahl der erforderlichen Zustandsgrößen kann von der Art, Größe und Dynamik des Luftfahrzeugs abhängen.

Ziel ist, das in der Recheneinheit ausgeführte Simulationsmodell mit dem Flug des betreffenden Luftfahrzeugs zu synchronisieren. Folglich sollte das Simulationsmodell exakt oder weitgehend exakt den tatsächlichen Bewegungen des Luftfahrzeugs folgen. Ein Simulationsmodell und der reale Flug des Luftfahrzeugs driften ohne eine solche Nachführung jedoch mit der Zeit auseinander, da zum Einen nicht alle Parameter des Simulationsmodells so exakt bekannt sind, dass eine driftfrei exakte Simulation möglich ist. Zum Anderen sind die Wetter- und Windverhältnisse, mit denen das Luftfahrzeug konfrontiert wird, ebenso nicht zu jedem Simulationszeitpunkt exakt bekannt. Durch eine Nachführung kann folglich eine Synchronisierung des Simulationsmodells erreicht werden. Hierzu wird erfindungsgemäß mindestens ein Funktionsglied der Simulation schrittweise durch einen Modellfehlerkorrekturterm angepasst.

Das mindestens eine Funktionsglied kann ein in einem üblichen Simulationsmodell bereits vorhandenes Glied mit mindestens einer Algorithmusfunktion sein und wird in jedem Rechenschritt durchlaufen. Ein Funktionsglied kann etwa eine mathematische Formulierung eines bestimmten Übertragungsverhaltens im Frequenzbereich oder im Zeitbereich aufweisen, das durch einen oder mehrere Parameter mitbestimmt wird. Durch einen Modellfehlerkorrekturterm kann zum Beispiel ein solcher Parameter gezielt geändert werden. Dadurch wird das betreffende mindestens eine Funktionsglied nach und nach, also in jedem aufeinanderfolgenden Rechenschritt, in seinem Übertragungsverhalten angepasst, so dass der Drift zwischen dem realen Flug und dem Simulationsmodell zumindest in einzelnen Zeitabschnitten eliminiert wird.

Das mindestens eine Funktionsglied kann des Weiteren auch einen Filteralgorithmus aufweisen, der durch Anwendung des Modellfehlerkorrekturterms beispielsweise diskret und rekursiv die Genauigkeit einer simulierten Zustandsgröße verbessern kann, auch wenn signifikante Fehler in gemessenen Zuständen vorliegen.

Allgemein ist anzumerken, dass die durch den Modellfehlerkorrekturterm beeinflusste Zustandsgröße auch eine nicht messbare Zustandsgröße sein kann, die jedoch ihrerseits eine andere Zustandsgröße beeinflusst, welche mit einer gemessenen Zustandsgröße verglichen wird. Die Nachführung des Simulationsmodells an den Flug des Luftfahrzeugs kann insbesondere von dem Aufbau des Simulationsmodells abhängen und folglich kann die Art des Korrekturterms bzw. der beeinflussten Zustandsgröße individuell für das Luftfahrzeug angepasst werden.

Die Überwachung einer Zustandsgröße kann in einem einfachen Fall das kontinuierliche Ermitteln einer Differenz aus einer gemessenen Zustandsgröße und einer simulierten Zustandsgröße aufweisen. Aus der Differenz wird anschließend, je nach Art und Ausführung der Beeinflussung des Funktionsglieds, ein Korrekturterm ermittelt. Dieser kann durch eine skalare Größe, eine vektorielle Größe oder eine Matrix charakterisiert sein. Ein anschließender Vergleich mit vorbestimmten Intervallgrenzen erlaubt eine Bewertung darüber, wie groß der Aufwand ist, das Simulationsmodell dem realen Flugzustand nachzuführen.

Bei ordnungsgemäßen Betrieb des Luftfahrzeugs ist davon auszugehen, dass die Beeinflussung des mindestens einen Funktionsglieds dazu führt, dass das Simulationsmodell stets dem realen Flug nachfolgt und ein Modellfehler schrittweise eliminiert wird, wenn er sich in dem Verhalten des Simulationsmodells äußert. Der Korrekturterm sollte weiterhin zumindest nach einem anfänglichen Satz von Rechenschritten sehr gering sein bzw. gegen Null tendieren.

Aufgrund der vielfältigen Abhängigkeiten verschiedener Zustandsgrößen des Simulationsmodells, die durch die flugmechanischen Gleichungen eine Art Kreuzverschaltung zueinander aufweisen, können Unregelmäßigkeiten etwa einer flugmechanischen Größe beim Betrieb des Luftfahrzeugs auch bei der Bildung des Korrekturterms für ein Funktionsglied auffallen, welches nicht direkt die betreffende flugmechanische Größe berechnet. Pendelt ein solcher Term etwa gegen Null oder befindet er sich innerhalb einer tolerierbaren Standardabweichung, kann ein plötzliches Ausschlagen bedeuten, dass eine Nachführung der Simulation plötzlich nur unter hoher mathematischer Anstrengung möglich ist.

Verlässt folglich der Korrekturterm einmalig oder wiederholt die vorbestimmten Intervallgrenzen, wird dies durch die Recheneinheit als Indiz dafür gewertet, dass sich das Luftfahrzeug nicht so verhält, wie es gewünscht ist. Durch die genannten mehrfachen Abhängigkeiten der Zustandsgrößen kann die Entdeckung eines unerwünschten Verhaltens einer bestimmten Zustandsgröße folglich in vielen Fällen auch durch Überwachung und Nachführung einer gänzlich anderen Zustandsgröße erfolgen. Dies führt zu einer besonders vorteilhaften Redundanz bei der Erkennung eines unerwünschten Verhaltens. Im Falle einer Entdeckung eines unerwünschten Verhaltens wird erfindungsgemäß ein Warnsignal an die Steuer- und Überwachungseinheit gesandt.

Die Steuer- und Überwachungseinheit ist dazu vorgesehen, bei Empfang eines Warnsignals unmittelbar einem Piloten, der sich an der Steuer- und Überwachungseinheit befindet, die Zustandsdaten des betreffenden Luftfahrzeugs anzeigen zu lassen und eine manuelle Steuerung durch den Benutzer zu initiieren.

Dies kann einhergehen mit einer akustischen und/oder optischen Warnung, so dass der Pilot unmittelbar darauf hingewiesen wird, dass bei einem Luftfahrzeug eine Abweichung von einem zu erwartenden Verhalten aufgetreten ist. Durch das direkte Umschalten des Steuerungsmodus von einem (teil-) autonomen Betrieb zu einer direkten Steuerung ist unmittelbar eine Überwachung und Steuerung des Luftfahrzeugs durch einen Piloten gewährleistet. Die an Bord des Luftfahrzeugs integrierbare zweite Kommunikationseinheit kann des Weiteren einen entsprechenden Steuerbefehl zum Umschalten eines Steuerungsmodus empfangen und an eine entsprechende Komponente übertragen.

Wird eine Reihe von Luftfahrzeugen jeweils mit einer solchen Recheneinheit ausgestattet oder gekoppelt und wird zumindest eine derartige Steuer- und Überwachungseinheit für sämtliche Luftfahrzeuge verwendet, kann ein einzelner Pilot eine (überschaubare) Vielzahl von Luftfahrzeugen überwachen und steuern. Es muss weder auf eine bestimmte Zuverlässigkeit oder Sicherheit verzichtet werden noch auf die Vorteile einer Reduktion der Anzahl von Piloten.

In einer vorteilhaften Ausführungsform weist das mindestens eine Funktionsglied einen rekursiven Filteralgorithmus auf, der durch den Modellfehlerkorrekturterm beeinflussbar ist. Folglich kann das Funktionsglied ein Filterglied aufweisen. Der Filteralgorithmus kann insbesondere eine Art von Prädiktor-Korrektor-Verfahren aufweisen, welches auf Basis eines durchgeführten Rechenschritts des Simulationsmodells unter Berücksichtigung einer entsprechenden, gemessenen Zustandsgröße eine Schätzung einer resultierenden Zustandsgröße erlaubt. Durch eine rekursive Anwendung des Filteralgorithmus zwischen zwei aufeinander folgenden Simulationsrechenschritten kann die resultierende Zustandsgröße, welche die Basis für den nachfolgenden Simulationsrechenschritt ist, beeinflusst werden.

Es ist weiterhin vorteilhaft, wenn das mindestens eine Funktionsglied einen Kalman-Filter aufweist. Der Kalman-Filter könnte vorteilhaft ein mehrdimensionaler Kalman-Filter sein. Dieser kann insbesondere in ein System aus flugmechanischen Bewegungsgleichungen integriert werden. In allgemeinen Verfahren wird der Kalman-Filter durch eine Modellierung einer Zustandsmatrix eines zukünftigen Zeitpunkts ausgedrückt, die neben einer Zustandsmatrix eines momentanen Zeitpunkts auch deterministische und zufällige äußere Einflüsse enthält. Bei zeitdiskreter Realisierung des Kalman-Filters kann eine Korrektur eines geschätzten Zustands durch einen Korrekturterm erfolgen, welcher die Bestimmung der sogenannten Innovation aus einer Differenz eines gemessenen und einer simulierten (geschätzten) Zustandsgröße, die Bestimmung der Innovationskovarianz und einer Kalman-Filter-Matrix erfordern kann. Der Korrekturterm kann insbesondere proportional zu der Innovation sein. Je größer der Korrekturterm ist, desto größer ist der Aufwand der Nachführung.

Die Recheneinheit kann bevorzugt eine interne Recheneinheit sein. Dies kann die Nachführung des Simulationsmodells vereinfachen, da die für die Nachführung des Simulationsmodells erforderlichen Zustandsdaten direkt an Bord des Luftfahrzeugs vorliegen. Sie kann für die Ausführung der Simulation als dedizierte Recheneinheit realisiert werden. Alternativ dazu kann auch eine herkömmliche, interne Recheneinheit des Luftfahrzeugs mehrere Aufgaben erfüllen, die auch die Ausführung des Simulationsmodells umfassen und darüber hinaus auch Steuer- und Regelaufgaben für das Luftfahrzeug umfassen können.

Die Steuer- und Überwachungseinheit kann bevorzugt eingerichtet sein, bei einem Verlust einer Datenverbindung zu dem Luftfahrzeug und insbesondere zu einer internen Recheneinheit eine Warnung auszugeben.

Desweiteren kann die Recheneinheit auch eine externe Recheneinheit sein, welche physikalisch von dem Luftfahrzeug getrennt und separat hiervon betrieben wird. Hierzu ist insbesondere eine bereits erwähnte Kommunikationseinheit erforderlich, die die von der Zustandsübertragungseinheit ausgesandten Daten empfangen kann, so dass eine Nachführung des Simulationsmodells durchführbar ist. Die Kommunikationseinheit kann weiterhin bidirektional sein, so dass die Recheneinheit auch Steuerbefehle an das Luftfahrzeug senden kann, um das Luftfahrzeug zu steuern.

In einer vorteilhaften Ausführungsform ist die Recheneinheit dazu eingerichtet, eine der Kommunikationseinheit und damit gekoppelter Einrichtungen immanente Zeitverzögerung zu simulieren. Die Flugzustandsdaten, die in der Kommunikationseinheit empfangen werden, unterliegen einer gewissen Zeitverzögerung, die durch die Entfernung von dem Luftfahrzeug und der Verarbeitungszeit in den durchlaufenen Komponenten abhängt. Diese kann simuliert werden, so dass die in der Recheneinheit ausgeführte Simulation um diese Zeitverzögerung dem echten Flugzustand hinterhereilt. Eine Nachführung erfolgt daher nicht auf bereits veralteten Flugzustandsdaten.

In einer vorteilhaften Ausführungsform weist das System mehrere Recheneinheiten auf, die jeweils einem individuellen Luftfahrzeug zugeordnet und gemeinsam mit einer einzelnen Steuer- und Überwachungseinheit gekoppelt sind. Wie eingangs erläutert, kann hierdurch durch einen einzelnen Piloten an einer Steuer- und Überwachungseinheit mit einer ausreichenden Zuverlässigkeit und Sicherheit festgestellt werden, ob sich die Luftfahrzeuge wie gewünscht verhalten, so dass aus zulassungsrechtlicher Sicht alle Luftfahrzeuge als individuell durch einen Piloten gesteuert angesehen werden können. Die Steuer- und Überwachungseinheit ist dann besonders bevorzugt dazu ausgebildet, ausschließlich das Luftfahrzeug auf einer Anzeigeeinrichtung anzuzeigen, welches ein unerwartetes Verhalten aufzeigt. Die übrigen Luftfahrzeuge können dabei im Hintergrund mit einer synchronisierten Simulation weiter überwacht werden. Sollte eines der Luftfahrzeuge ein unerwartetes Verhalten aufzeigen, könnten zumindest die Flugzustandsdaten des betreffenden Luftfahrzeugs optisch auf der Anzeigeeinrichtung in den Vordergrund gebracht werden.

Die Steuer- und Überwachungseinheit könnte überdies dazu in der Lage sein, auf manuelle Anforderung eines Benutzers jedes der betreffenden Luftfahrzeuge selektiv anzuzeigen. Es wäre denkbar, dass die Anzeigeeinrichtung mehrere Bildschirme aufweist. Einer der Bildschirme kann dazu vorgesehen sein, eine geordnete Anzeige sämtlicher Luftfahrzeuge vorzusehen. Die Anzeigeeinrichtung kann ferner mindestens einen dedizierten Bildschirm aufweisen, der dazu vorgesehen ist, jeweils ein individuelles Luftfahrzeug anzuzeigen.

In einer vorteilhaften Ausführungsform sind die Flugzustandsdaten aus einer Gruppe von Flugzustandsdaten ausgewählt, die Gruppe aufweisend translatorische und rotatorische Beschleunigungen, Systemstatusdaten, Positionsdaten und Lagewinkel. Die translatorischen Beschleunigungen können die Beschleunigungen entlang einer Längsachse, einer Hochachse und einer Querachse insbesondere eines flugzeugfesten oder flugbahnfesten Koordinatensystems aufweisen. Diese Beschleunigungen können durch Initialmesseinheiten an Bord des Luftfahrzeugs gemessen werden. Gleiches gilt für die rotatorischen Beschleunigungen, die um die drei genannten Achsen bestimmbar sind. Insbesondere diese sechs Größen können die Bewegung des Luftfahrzeugs im Raum kennzeichnen und könnten für die Nachführung des Simulationsmodells geeignet sein. In einer ebenso vorteilhaften Ausführungsform weisen die Flugzustandsdaten Systemstatusdaten auf. Systemstatusdaten können jegliche Daten betreffen, die einen Status eines Systems repräsentieren. Neben dem Betriebszustand einer Schub erzeugenden Einrichtung und sämtlichen Klappenstellungen könnten diese auch einen Fahrwerkszustand aufweisen. Die Systemstatusdaten können ebenso Auswirkungen auf den Flugzustand des Luftfahrzeugs haben. In einer weiter vorteilhaften Ausführungsform weisen die Flugzustandsdaten Positionsdaten auf. Die Positionsdaten können nicht direkt gemessen, sondern beispielsweise über Satellitennavigation bestimmt werden. Da das Simulationsmodell auch Umgebungsdaten berücksichtigen könnte, könnte aus den ermittelten Geschwindigkeiten auch jeweils die Position des Luftfahrzeugs bekannt sein. Sollten hier ebenfalls Abweichungen von einer ermittelten Position des Luftfahrzeugs und einer simulierten Position vorliegen, könnte dies auf fehlerhafte Wetterdaten, einen Defekt einer Satellitennavigation oder eingeschränkte Funktionen einer Flugsteuerung zurückzuführen sein. Ebenso vorteilhaft können die Flugzustandsdaten Lagewinkel aufweisen.

Durch die mehrfachen Abhängigkeiten der Zustandsgrößen in der Simulation müssen nicht sämtliche der genannten und durch die Flugzustandsdaten nachführbaren Zustandsgrößen überwacht werden, wie vorangehend bereits erwähnt. Führt das Luftfahrzeug etwa einen Horizontalflug durch, der sich durch einen konstanten, vergleichsweise niedrigen Anstellwinkel kennzeichnet, kann etwa bei der reinen Nachführung einer Längsbeschleunigung ein unerwünschtes Verhalten des Luftfahrzeugs festgestellt werden, wenn die Längsbeschleunigung und der Zustand einer Schub erzeugenden Einrichtung nicht zusammenpassen. Wird etwa eine vergleichsweise hohe Schubkraft erzeugt, dennoch eine negative Längsbeschleunigung gemessen und nachgeführt, kann dies in einer fehlerhaften Zustandsgröße oder einem Defekt der Schub erzeugenden Einrichtung begründet sein, einem fehlerhaften Messwert des Anstellwinkels des Luftfahrzeugs oder weiteren Ereignissen. Die Verknüpfung der Zustandsgrößen über das Gleichungssystem führt dann zu einem hohen ermittelten Modellfehler. Durch geeignete Wahl der genannten Intervallgrenzen kann ein Überschreiten eines tolerierbaren Modellfehlerkorrekturterms detektiert werden.

Die Erfindung betrifft ferner ein Verfahren zum Überwachen des Zustands eines Luftfahrzeugs mit den Merkmalen des nebengeordneten Anspruchs. Es wird ein Verfahren zum Überwachen des Zustands eines unbemannten Luftfahrzeugs vorgeschlagen, das die Schritte des Ausführens eines Simulationsmodells des betreffenden Luftfahrzeugs durch numerische Integration eines Gleichungssystems mit einem Simulations-Zustandsvektor in einer Recheneinheit, des wiederholten Nachführens des Simulations-Zustandsvektors zumindest einer Teilmenge von zuvor gemessenen Flugzustandsdaten durch schrittweise Anpassung mindestens eines Funktionsglieds des Simulationsmodells durch mindestens einen Modellfehlerkorrektur-term, wobei der Modellfehlerkorrekturterm aus einer ermittelten Differenz aus einer gemessenen Zustandsgröße und einer simulierten Zustandsgröße ermittelt wird, des Überwachens des Verlaufs des mindestens einen Modellfehlerkorrekturterms und beim Detektieren eines einmaligen oder wiederholten Überschreitens vorgegebener Intervallgrenzen durch den Modellfehlerkorrekturterm des Aussendens eines Warnsignals an die Steuer- und Überwachungseinheit, und des Ausgebens eines Warnhinweises an eine mit der Recheneinheit gekoppelte Steuer- und Überwachungseinheit bei Empfang eines Warnsignals, des kontinuierlichen Anzeigens von Flugzustandsdaten des Luftfahrzeugs, die von einer in dem betreffenden Luftfahrzeug befindlichen Zustandsübertragungseinheit ausgesandt werden und des Änderns eines Steuerungsmodus des Luftfahrzeugs zu einer direkten Steuerung durch den Benutzer durch Senden eines entsprechenden Schaltbefehls an eine in dem Luftfahrzeug befindliche Kommunikationseinheit aufweist.

In einer vorteilhaften Ausführungsform kann das Anpassen des mindestens einen Funktionsglieds das Ausführen eines rekursiven Filteralgorithmus aufweisen, der durch den mindestens einen Modellfehlerkorrekturterm beeinflussbar ist.

Bevorzugt weist das mindestens eine Funktionsglied einen Kalman-Filter auf, wie bereits weiter vorangehend ausgeführt.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine schematische Ansicht eines erfindungsgemäßen Systems.
Fig. 2 zeigt eine schematische Darstellung eines Validierungsvorgangs.

### DETAILLIERTE DARSTELLUNG EXEMPLARISCHER AUSFÜHRUNGSFORMEN

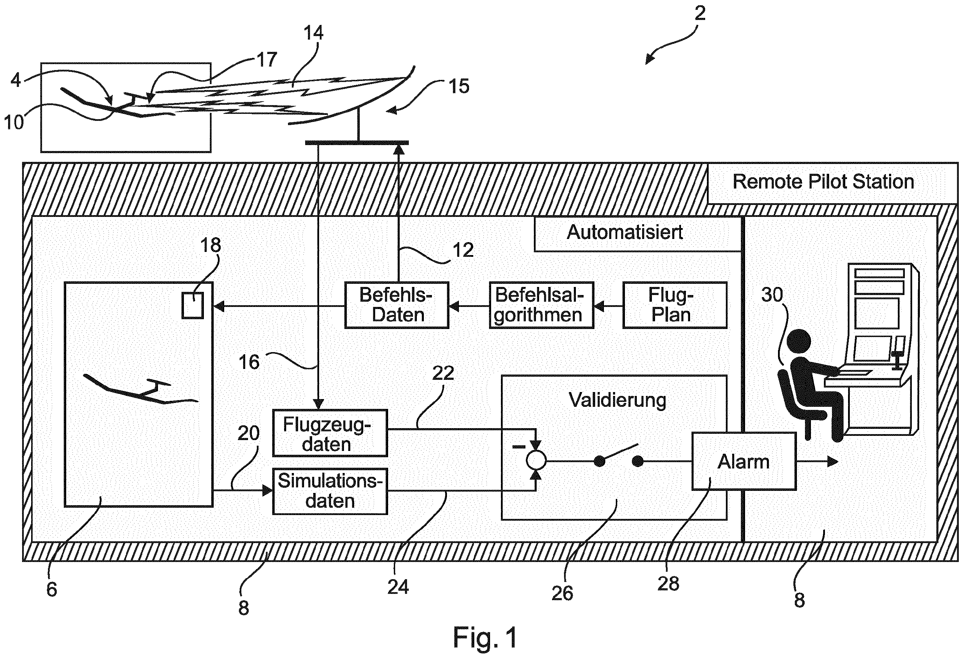

Fig. 1 zeigt ein erfindungsgemäßes System 2 zum Überwachen des Zustands eines unbemannten Luftfahrzeugs 4 in einer sehr schematischen Darstellung. Das System 2 weist für jedes unbemannte Luftfahrzeug 4 eine Recheneinheit 6 auf, die mit einer einzelnen Steuer- und Überwachungseinheit 8 verbunden ist. Diese könnte auch als "Remote Pilot Station" bezeichnet werden. Exemplarisch ist die Recheneinheit 6 als externe Recheneinheit ausgeführt, die von dem Luftfahrzeug 4 getrennt ist und sich beispielhaft am Boden befindet.

Um die Grundzüge des erfindungsgemäßen Systems 2 darzustellen, wird hier lediglich eine einzelne Recheneinheit 6 dargestellt. Tatsächlich kann eine Vielzahl von Luftfahrzeugen 4 vorgesehen sein, die jeweils einer Recheneinheit 6 zugeordnet sind. Sämtliche Recheneinheiten 6 sind mit der Steuer- und Überwachungseinheit 8 gekoppelt. Es kann vorgesehen sein, bis zu 5, 10, 20, 50 oder mehr Luftfahrzeuge 4 auf diese Weise einer einzelnen Steuer- und Überwachungseinheit 8 zuzuordnen. In jedem Luftfahrzeug 4 ist außerdem eine Zustandsendeeinheit 10 vorgesehen, die dazu ausgebildet ist, Flugzustandsdaten des Luftfahrzeugs 4 auszusenden, die an Bord des Luftfahrzeugs 4 gemessen werden.

Die Steuer- und Überwachungseinheit 8 ist dazu ausgebildet, Steuerbefehle 12 an das Luftfahrzeug 4 zu übertragen und dieses dadurch zumindest zeitweise zu steuern. Hierfür ist eine Datenverbindung 14 vorhanden, die sich zwischen einer ersten Kommunikationseinheit 15 am Boden und einer zweiten Kommunikationseinheit 17 in dem Luftfahrzeug 4 erstreckt. Die Datenverbindung 14 ist in diesem Beispiel dazu ausgebildet, eine bidirektionale Übertragung von Daten vorzunehmen. Die Recheneinheit 6 ist durch eine Empfangseinheit 18 dann etwa dazu ausgebildet, Flugzustandsdaten 16 zu empfangen, welche von der Zustandsübertragungseinheit 10 ausgesandt werden. Die Übertragung von Steuerbefehlen kann etwa das Übertragen eines Flugplans aufweisen. Über entsprechende Befehlsalgorithmen können hieraus Befehlsdaten generiert werden.

Die Recheneinheit 6 ist dazu ausgebildet, eine Simulation des Luftfahrzeugs 4 auszuführen. Hiermit ist die Recheneinheit 6 in der Lage, den Betrieb des Luftfahrzeugs 4 möglichst vollständig in Form einer Simulation nachzubilden. Hierbei wird eine getaktete, numerische Integration eines flugmechanischen Gleichungssystems ausgeführt und unter Berücksichtigung sämtlicher auftretender Kräfte und Momente werden Beschleunigungen, Geschwindigkeiten, Positionen und Lagewinkel des Luftfahrzeugs 4 im Raum berechnet.

Bei der Ausführung der Simulation werden Simulationsdaten 20 erzeugt, aus denen ein Simulations-Zustandsvektor 24 generiert wird. Aus den übermittelten Flugzustandsdaten 16 wird außerdem ein Ist-Zustandsvektor 22 generiert, der zumindest eine Teilmenge von zuvor gemessenen Zustandsdaten aufweist. Die Recheneinheit 6 ist dazu ausgebildet, wiederholt den Simulations-Zustandsvektor 24 durch schrittweise Anpassung mindestens eines Funktionsglieds des Simulationsmodells durch mindestens einen Modellfehlerkorrekturterm nachzuführen.

Dieser wird durch eine Validierungseinheit 26 generiert, die ein logischer Abschnitt der Recheneinheit 6 sein kann. Dort wird der Verlauf des mindestens einen Modellfehlerkorrekturterms überwacht und bei einmaligem oder wiederholtem Überschreiten vorgegebener Intervallgrenzen durch den Modellfehlerkorrekturterm wird ein Warnsignal 28 an die Steuer- und Überwachungseinheit 8 gesendet.

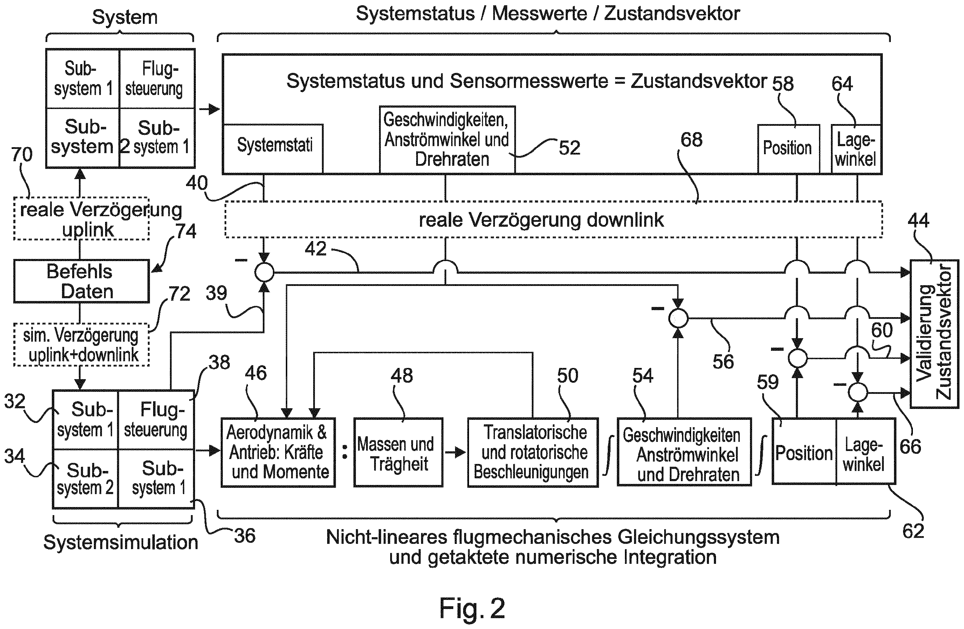

Hierdurch wird die Steuer- und Überwachungseinheit 8 dazu veranlasst, Steuerbefehle eines Benutzers 30 direkt an das Luftfahrzeug 4 zu übertragen. Ein Steuerungsmodus des Luftfahrzeugs 4 wird folglich von einer automatischen zu einer direkten Steuerung geändert. Eine Validierung der Zustandsvektoren 22 und 24 ist etwas detaillierter in Fig. 2 dargestellt.

Die Simulation kann durch eine Simulationseinheit 31 durchgeführt werden, die in Form eines ausführbaren Computerprogramms in der Recheneinheit 6 realisiert sein kann. Die Simulationseinheit 31 ist beispielhaft dazu ausgebildet, mehrere Subsysteme 32, 34, 36 sowie eine Flugsteuerung 38 zu simulieren. Dies betrifft eine Reihe von mechanischen, hydraulischen und/oder elektrischen Systemen, etwa durch Aktuatoren betätigte Klappen, ein Fahrwerk, ein Triebwerk und ähnliches, die zu Systemzuständen 39 führen. Diese Systemzustände 39 können direkt mit ermittelten Systemzuständen 40 des Luftfahrzeugs 4 verglichen werden. Hierdurch wird eine erste Differenz 42 ermittelt, die in einen Validierungsalgorithmus 44 einfließt. Die erste Differenz 42 kann eine Reihe von Skalaren, einen Vektor oder eine Matrix aufweisen, die die Abweichungen individueller simulierter Systemzustände von gemessenen Systemzuständen enthalten.

Basierend auf der Simulation der Subsysteme 32 bis 36 und der Flugsteuerung 38 können basierend auf einem flugmechanischen Gleichungssystem Beschleunigungen und Momente ermittelt werden, die sich an dem Luftfahrzeug 4 ergeben. Hierzu sind die Eigenschaften des Luftfahrzeugs 4 in dem Simulationsmodell hinlänglich genau zu definieren, so dass ein Kräfte- und Momentengleichgewicht erzeugt werden kann. Dieser Vorgang wird in einem Block 46 dargestellt.

Hierbei sind alle Massen und Trägheiten 48 zu berücksichtigen und es ergeben sich translatorische und rotatorische Beschleunigungen 50, die zur Simulation mit dem Block 46 rückgekoppelt sind. Dieser kann ferner gemessenen Geschwindigkeiten, Anströmwinkeln und/oder Drehraten 52 nachgeführt werden, welche als gemessene Flugzustandsdaten über die Zustandsübertragungseinheit 10 an die Recheneinheit 6 übertragen werden. Es sind nicht sämtliche dieser Zustände erforderlich, um die Simulation dem realen Flugzustand nachzuführen. Es könnte vielmehr ausreichen, lediglich eine Teilmenge zu verwenden, um eine Synchronisation der Simulation und des realen Flugs zu erreichen.

Durch eine Integration der translatorischen und rotatorischen Beschleunigungen 50 werden Geschwindigkeiten, Anströmwinkel und Drehraten 54 berechnet. Diese können mit den realen Geschwindigkeiten, Anströmwinkeln und Drehraten 52 verglichen werden. Eine hieraus erfolgende zweite Differenz 56 wird ebenso dem Validierungsalgorithmus 44 zugeführt.

Aus einer weiteren Integration erfolgt schließlich eine Ermittlung einer Position 59 des Luftfahrzeugs im Raum, die mit einer Ist-Position 58 des Luftfahrzeugs 4 verglichen wird. Die hieraus folgende dritte Differenz 60 wird dem Validierungsalgorithmus 44 zugeführt. Ebenso werden die simulierten Lagewinkel 62 mit Ist-Lagewinkeln 64 verglichen, die vierte Differenz 66 wird dem Validierungsalgorithmus 44 zugeführt.

Die Blöcke 46, 48, 50, 54, 59 und 62 können im Folgenden auch als Funktionsglieder bezeichnet werden. Diese können jeweils eine Reihe von Parametern und Algorithmen aufweisen, welche das Verhalten der Funktionsglieder 46, 48, 50, 54, 59 und 62 bestimmen. Durch Beeinflussung etwa von Simulationsparametern, einer Eingangsgröße oder einer Ausgangsgröße kann eine Nachführung der Simulation erreicht werden.

Der Validierungsalgorithmus 44 kann des Weiteren durch die Differenzen 42, 56, 60 und 66 eine Kenntnis eines Modellfehlers erlangen. Hieraus können je nach Art der Nachführung der Simulation ein oder mehrere Modellfehlerkorrekturterme generiert werden, welche zur Beeinflussung eines der Funktionsglieder 46, 48, 50, 54, 59 und 62 genutzt werden können. Ziel ist, eine sukzessive Eliminierung des Modellfehlers zu erreichen.

Mindestens eines der Funktionsglieder 46, 48, 50, 54, 59 und 62 kann ferner einen Kalman-Filter aufweisen. Dieser kann unabhängig von den Rechenschritten der Simulation rekursiv ausgeführt werden. Der vorangehend genannte Modellfehler kann zur Beeinflussung des Kalman-Filters verwendet werden. Ferner kann auch der Kalman-Filter Filtergrößen an den Validierungsalgorithmus 44 übertragen, so dass diese in die Validierung bzw. Überwachung einfließen oder diese maßgeblich bestimmen.

Der Validierungsalgorithmus ist indes dazu angepasst, für vorgesehene Modellfehlerkorrekturterme tolerierbare Intervallgrenzen vorzusehen. Verlassen die in dem Validierungsalgoritmus gebildeten Modellfehlerkorrekturterme einmalig oder mehrmalig diese Intervallgrenzen, ist der Aufwand zur Nachführung der Simulation an den Ist-Flugzustand als mathematisch sehr aufwändig zu bewerten. Dies ist als Indiz zu werten, dass die durch die flugmechanischen Gleichungen mehrfach voneinander abhängigen Zustandsgrößen zumindest temporär nicht zueinander passen. Ist dies der Fall, sollte das Warnsignal 28 ausgegeben werden.

Da zwischen dem Luftfahrzeug und der Recheneinheit 6 eine Verzögerung bei der Übertragung von Daten vorliegt, werden Zeitverzögerungen eines zu der Recheneinheit 6 gerichteten Verbindung 68 ebenso simuliert wie die zu dem Luftfahrzeug 4 gerichtete Verbindung 70. Dies ergibt ein Verzögerungsglied 72, das der Simulationseinheit 31 vorgeschaltet ist. Des Weiteren sei angemerkt, dass die Simulationseinheit 31 und das Luftfahrzeug 4 mit denselben Eingangsgrößen 74 versorgt werden, die etwa die Steuerbefehle 12 beinhalten, so dass insbesondere das Simulationsmodell und das reale Luftfahrzeug mit denselben Steuerbefehlen versehen werden.

## Patentansprüche

1. System (2) zum Überwachen des Zustands eines unbemannten Luftfahrzeugs, aufweisend:
- eine erste Kommunikationseinheit (15),
- eine zweite Kommunikationseinheit (17), die in das Luftfahrzeug (4) integrierbar ist,
- eine in das Luftfahrzeug (4) integrierbare Zustandsübertragungseinheit (10) zum Übertragen von Zustandsdaten des Luftfahrzeugs (4),
- eine dem Luftfahrzeug (4) zugeordnete Recheneinheit (6) zum Validieren des Zustands des Luftfahrzeugs (4) und
- eine mit der Recheneinheit (6) verbundene externe Steuer- und Überwachungseinheit (8) mit Eingabemitteln,
wobei die Recheneinheit (6) dazu eingerichtet ist,
- ein Simulationsmodell des betreffenden Luftfahrzeugs (4) auszuführen, wobei das Simulationsmodell auf einer numerischen Integration eines Gleichungssystems mit einem Simulations-Zustandsvektor basiert,
- wiederholt den Simulations-Zustandsvektor zumindest einer Teilmenge von zuvor gemessenen Flugzustandsdaten durch schrittweise Anpassung mindestens eines Funktionsglieds (46, 48, 50, 54, 59, 62) des Simulationsmodells durch mindestens einen Modellfehlerkorrekturterm nachzuführen, wobei der Modellfehlerkorrekturterm aus einer ermittelten Differenz aus einer gemessenen Zustandsgröße und einer simulierten Zustandsgröße ermittelt wird, und
- den Verlauf des mindestens einen Modellfehlerkorrekturterms zu überwachen und bei einmaligem oder wiederholtem Überschreiten vorgegebener Intervallgrenzen durch den Modellfehlerkorrekturterm ein Warnsignal an die Steuer- und Überwachungseinheit (8) zu senden,
wobei die Steuer- und Überwachungseinheit (8) dazu eingerichtet ist, bei Empfang eines Warnsignals einem Benutzer (30) unmittelbar einen Warnhinweis auszugeben, kontinuierlich von der Zustandsübertragungseinheit übertragene Flugzustandsdaten des Luftfahrzeugs (4) anzuzeigen und einen Steuerungsmodus des Luftfahrzeugs (4) zu einer direkten Steuerung durch den Benutzer (30) durch Senden eines entsprechenden Schaltbefehls an das Luftfahrzeug (4) zu ändern.

2. System (2) nach Anspruch 1, wobei das mindestens eine Funktionsglied (46, 48, 50, 54, 59, 62) einen rekursiven Filteralgorithmus aufweist, der durch den Modellfehlerkorrekturterm beeinflussbar ist.

3. System (2) nach Anspruch 1 oder 2, wobei das mindestens eine Funktionsglied (46, 48, 50, 54, 59, 62) einen Kalman-Filter aufweist.

4. System (2) nach einem der vorhergehenden Ansprüche, wobei die Recheneinheit (6) eine interne Recheneinheit (6) ist.

5. System (2) nach einem der Ansprüche 1 bis 3, wobei die Recheneinheit (6) eine externe Recheneinheit (6) ist und wobei die externe Recheneinheit (6) dazu ausgebildet ist, über eine Kommunikationseinheit Zustandsdaten des Luftfahrzeugs (4) zu empfangen

6. System (2) nach Anspruch 5,
wobei die Recheneinheit (6) dazu eingerichtet ist, eine der Kommunkationseinrichtung und damit gekoppelter Einrichtungen immanente Zeitverzögerung zu simulieren.

7. System (2) nach einem der vorhergehenden Ansprüche,
aufweisend mehrere Recheneinheiten (6), die jeweils einem individuellen Luftfahrzeug zugeordnet sind und gemeinsam mit einer einzelnen Steuer- und Überwachungseinheit (8) gekoppelt sind.

8. System (2) nach Anspruch 7,
wobei die Steuer- und Überwachungseinheit (8) eine Anzeigeeinrichtung aufweist, und
wobei die Steuer- und Überwachungseinheit (8) dazu eingerichtet ist, zumindest die Flugzustandsdaten eines Luftfahrzeugs (4) optisch auf der Anzeigeeinrichtung in den Vordergrund zu bringen, wenn das betreffende Luftfahrzeug (4) ein unerwartetes Verhalten aufzeigt.

9. System (2) nach einem der vorhergehenden Ansprüche,
wobei die Flugzustandsdaten aus einer Gruppe von Flugzustandsdaten ausgewählt sind, die Gruppe aufweisend:
- translatorische und rotatorische Beschleunigungen,
- Systemstatusdaten,
- Positionsdaten, und
- Lagewinkel.

10. Verfahren zum Überwachen des Zustands eines unbemannten Luftfahrzeugs, aufweisend die Schritte:
- Ausführen eines Simulationsmodells des betreffenden Luftfahrzeugs (4) durch numerische Integration eines Gleichungssystems mit einem Simulations-Zustandsvektor in einer Recheneinheit (6),
- wiederholtes Nachführen des Simulations-Zustandsvektors zumindest einer Teilmenge von zuvor gemessenen Flugzustandsdaten durch schrittweise Anpassung mindestens eines Funktionsglieds (46, 48, 50, 54, 59, 62) des Simulationsmodells durch mindestens einen Modellfehlerkorrekturterm, wobei der Modellfehlerkorrekturterm aus einer ermittelten Differenz aus einer gemessenen Zustandsgröße und einer simulierten Zustandsgröße ermittelt wird,
- Überwachen des Verlaufs des mindestens einen Modellfehlerkorrekturterms und beim Detektieren eines einmaligen oder wiederholten Überschreitens vorgegebener Intervallgrenzen durch den Modellfehlerkorrekturterm Aussenden eines Warnsignals an die Steuer- und Überwachungseinheit (8), und
- Ausgeben eines Warnhinweises an einer mit der Recheneinheit (6) gekoppelten Steuer- und Überwachungseinheit (8) bei Empfang eines Warnsignals, kontinuierliches Anzeigen von Flugzustandsdaten des Luftfahrzeugs (4), die von einer in dem betreffenden Luftfahrzeug (4) befindlichen Zustandsübertragungseinheit ausgesandt werden und Ändern eines Steuerungsmodus des Luftfahrzeugs (4) zu einer direkten Steuerung durch den Benutzer durch Senden eines entsprechenden Schaltbefehls an eine in dem Luftfahrzeug (4) befindliche Kommunikationseinheit (17).

11. Verfahren nach Anspruch 10,
wobei das Anpassen des mindestens einen Funktionsglieds (46, 48, 50, 54, 59, 62) das Ausführen eines rekursiven Filteralgorithmus aufweist, der durch den mindestens einen Modellfehlerkorrekturterm beeinflussbar ist.

12. Verfahren nach Anspruch 10 oder 11,
wobei das mindestens eine Funktionsglied (46, 48, 50, 54, 59, 62) einen Kalman-Filter aufweist.

## Claims

1. System (2) for monitoring the state of an unmanned aircraft, comprising:
- a first communication unit (15),
- a second communication unit (17) that can be integrated into the aircraft (4),
- a state transmission unit (10) that can be integrated into the aircraft (4) for transmitting state data of the aircraft (4),
- a computing unit (6) assigned to the aircraft (4) for validating the state of the aircraft (4) and
- an external control and monitoring unit (8) connected to the computing unit (6) with input means,
wherein the computing unit (6) is set up to
- execute a simulation model of the aircraft (4) in question, wherein the simulation model is based on numerical integration of a system of equations with a simulation state vector,
- repeatedly track the simulation state vector of at least one subset of previously measured flight status data by stepwise adjustment of at least one functional element (46, 48, 50, 54, 59, 62) of the simulation model by at least one model error correction term, wherein the model error correction term is determined from a determined difference between a measured state variable and a simulated state variable, and
- monitor the variation of the at least one model error correction term and send a warning signal to the control and monitoring unit (8) if the model error correction term exceeds predetermined interval limits once or multiple times,
wherein the control and monitoring unit (8) is set up to output a warning message directly to a user (30) on receiving a warning signal, to continuously display flight status data of the aircraft (4) received from the state transmission unit and to change a control mode of the aircraft (4) to direct control by the user (30) by sending a corresponding switching command to the aircraft (4) .

2. System (2) according to Claim 1, wherein the at least one functional element (46, 48, 50, 54, 59, 62) comprises a recursive filter algorithm that can be influenced by the model error correction term.

3. System (2) according to Claim 1 or 2, wherein the at least one functional element (46, 48, 50, 54, 59, 62) comprises a Kalman filter.

4. System (2) according to any one of the preceding claims, wherein the computing unit (6) is an internal computing unit (6).

5. System (2) according to any one of Claims 1 to 3, wherein the computing unit (6) is an external computing unit (6), and wherein the external computing unit (6) is designed to receive state data of the aircraft (4) via a communication unit.

6. System (2) according to Claim 5, wherein the computing unit (6) is set up to simulate an inherent time delay of the communication device and devices coupled thereto.

7. System (2) according to any one of the preceding claims, comprising several computing units (6), each assigned to an individual aircraft and together coupled to a single control and monitoring unit (8).

8. System (2) according to Claim 7, wherein the control and monitoring unit (8) comprises a display device, and wherein the control and monitoring unit (8) is set up to optically bring at least the flight status data of an aircraft (4) to the foreground on the display device when the aircraft (4) in question is exhibiting unexpected behaviour.

9. System (2) according to any one of the preceding claims, wherein the flight status data is selected from a group of flight status data, wherein the group includes:
- translational and rotational accelerations,
- system status data,
- position data, and
- position angle.

10. Method for monitoring the state of an unmanned aircraft, comprising the steps of:
- executing a simulation model of the aircraft (4) in question by numerical integration of a system of equations with a simulation state vector in a computing unit (6),
- repeatedly tracking the simulation state vector of at least one subset of previously measured flight status data by stepwise adjustment of at least one functional element (46, 48, 50, 54, 59, 62) of the simulation model by at least one model error correction term, wherein the model error correction term is determined from a determined difference between a measured state variable and a simulated state variable,
- monitoring the variation of the at least one model error correction term and sending a warning signal to the control and monitoring unit (8) on detecting a single or repeated instance of the model error correction term exceeding predetermined interval limits, and
- outputting a warning message to a control and monitoring unit (8) coupled to the computing unit (6) on receiving a warning signal, continuously displaying flight status data of the aircraft (4) transmitted by a state transmission unit disposed in the aircraft (4) concerned and changing a control mode of the aircraft (4) to direct control by the user by sending a corresponding switching command to a communication unit (17) in the aircraft (4).

11. Method according to Claim 10, wherein the adjustment of the at least one functional element (46, 48, 50, 54, 59, 62) includes the execution of a recursive filter algorithm that can be influenced by the at least one model error correction term.

12. Method according to Claim 10 or 11, wherein the at least one functional element (46, 48, 50, 54, 59, 62) comprises a Kalman filter.

## Revendications

1. Système (2) de surveillance de l'état d'un aéronef sans pilote, ledit système comprenant :
- une première unité de communication (15),
- une deuxième unité de communication (17) qui peut être intégrée dans l'aéronef (4),
- une unité de transmission d'état (10) qui peut être intégrée dans l'aéronef (4) et qui est destinée à transmettre des données d'état de l'aéronef (4),
- une unité de calcul (6) qui est associée à l'aéronef (4) et qui est destinée à valider l'état de l'aéronef (4) et
- une unité de commande et de surveillance externe (8) qui est reliée à l'unité de calcul (6) et qui comprend des moyens d'entrée,
l'unité de calcul (6) étant conçue pour
- exécuter un modèle de simulation de l'aéronef concerné (4), le modèle de simulation étant basé sur une intégration numérique d'un système d'équations comportant un vecteur d'état de simulation,
- suivre de manière répétée le vecteur d'état de simulation d'au moins un sous-ensemble de données d'état de vol précédemment mesurées par adaptation pas à pas d'au moins un élément fonctionnel (46, 48, 50, 54, 59, 62) du modèle de simulation par le biais d'au moins un terme de correction d'erreur de modèle, le terme de correction d'erreur de modèle étant déterminé à partir d'une différence déterminée entre une grandeur d'état mesurée et une grandeur d'état simulée, et
- surveiller l'évolution de l'au moins un terme de correction d'erreur de modèle et émettre un signal d'avertissement à destination de l'unité de commande et de surveillance (8) lorsque des limites d'intervalle prédéterminées sont dépassées une ou plusieurs fois par le terme de correction d'erreur de modèle,
l'unité de commande et de surveillance (8) étant conçue, lors de la réception d'un signal d'avertissement, pour délivrer immédiatement un avertissement à un utilisateur (30), afficher des données d'état de vol de l'aéronef (4) transmises en continu par l'unité de transmission d'état et modifier un mode de commande de l'aéronef (4) en vue d'une commande directe par l'utilisateur (30) par émission d'une instruction de commutation correspondante à destination de l'aéronef (4).

2. Système (2) selon la revendication 1, l'au moins un élément fonctionnel (46, 48, 50, 54, 59, 62) comportant un algorithme de filtrage récursif qui peut être influencé par le terme de correction d'erreur de modèle.

3. Système (2) selon la revendication 1 ou 2, l'au moins un élément fonctionnel (46, 48, 50, 54, 59, 62) comportant un filtre de Kalman.

4. Système (2) selon l'une des revendications précédentes, l'unité de calcul (6) étant une unité de calcul interne (6).

5. Système (2) selon l'une des revendications 1 à 3, l'unité de calcul (6) étant une unité de calcul externe (6) et l'unité de calcul externe (6) étant conçue pour recevoir des données d'état de l'aéronef (4) par le biais d'une unité de communication.

6. Système (2) selon la revendication 5,
l'unité de calcul (6) étant conçue pour simuler un retard inhérent au dispositif de communication et aux dispositifs accouplés à celui-ci.

7. Système (2) selon l'une des revendications précédentes, comportant une pluralité d'unités de calcul (6) qui sont chacune associées à un aéronef individuel et qui sont couplées conjointement à une seule unité de commande et de surveillance (8).

8. Système (2) selon la revendication 7,
l'unité de commande et de surveillance (8) comportant un dispositif d'affichage, et
l'unité de commande et de surveillance (8) étant conçue pour amener au moins les données d'état de vol d'un aéronef (4) optiquement au premier plan sur le dispositif d'affichage lorsque l'aéronef concerné (4) présente un comportement inattendu.

9. Système (2) selon l'une des revendications précédentes,
les données d'état de vol étant sélectionnées dans un groupe de données d'état de vol, le groupe comportant :
- des accélérations en translation et en rotation,
- des données d'état de système,
- des données de position, et
- des angles de positionnement.

10. Procédé de surveillance de l'état d'un aéronef sans pilote, ledit procédé comportant les étapes suivantes :
- exécuter un modèle de simulation de l'aéronef concerné (4) par intégration numérique d'un système d'équations comportant un vecteur d'état de simulation dans une unité de calcul (6),
- suivre de manière répétée le vecteur d'état de simulation d'au moins un sous-ensemble de données d'état de vol précédemment mesurées par adaptation pas à pas d'au moins un élément fonctionnel (46, 48, 50, 54, 59, 62) du modèle de simulation par le biais d'au moins un terme de correction d'erreur de modèle, le terme de correction d'erreur de modèle étant déterminé à partir d'une différence déterminée entre une grandeur d'état mesurée et une grandeur d'état simulée,
- surveiller l'évolution de l'au moins un terme de correction d'erreur de modèle et, lors de la détection d'un dépassement unique ou répété de limites d'intervalle spécifiées par le terme de correction d'erreur de modèle, émettre un signal d'avertissement à destination de l'unité de commande et de surveillance (8), et
- délivrer un avertissement au niveau d'une unité de commande et de surveillance (8) couplée à l'unité de calcul (6) lors de la réception d'un signal d'avertissement, afficher en continu des données d'état de vol de l'aéronef (4) qui sont envoyées par une unité de transmission d'état située dans l'aéronef concerné (4) et modifier un mode de commande de l'aéronef (4) en vue d'une commande directe par l'utilisateur par émission d'une instruction de commutation correspondante à destination d'une unité de communication (17) située dans l'aéronef (4).

11. Procédé selon la revendication 10,
l'adaptation de l'au moins un élément fonctionnel (46, 48, 50, 54, 59, 62) comportant l'exécution d'un algorithme de filtrage récursif qui peut être influencé par l'au moins un terme de correction d'erreur de modèle.

12. Procédé selon la revendication 10 ou 11,
l'au moins un élément fonctionnel (46, 48, 50, 54, 59, 62) comportant un filtre de Kalman.
